(19) Europäisches Patentamt

European Patent Office

Office européen des brevets

(11) Publication number: **0 240 253 B1**

(12) **EUROPEAN PATENT SPECIFICATION**

(45) Date of publication of patent specification: **02.12.92**

(51) Int. Cl.5: **C08F 289/00**, C08F 2/32, C08F 2/16, C09D 5/02

(21) Application number: **87302637.1**

(22) Date of filing: **26.03.87**

(54) **Resin emulsions.**

(30) Priority: **26.03.86 GB 8607547**

(43) Date of publication of application:
**07.10.87 Bulletin  87/41**

(45) Publication of the grant of the patent:
**02.12.92 Bulletin  92/49**

(84) Designated Contracting States:
**BE CH DE ES FR GB IT LI NL SE**

(56) References cited:
**US-A- 3 379 663**

(73) Proprietor: **EXXON CHEMICAL PATENTS INC.**
**1900 East Linden Avenue**
**Linden New Jersey 07036(US)**

(72) Inventor: **Wouters, Guy**
**Avenue van Becelaere 28A (BTE 12)**
**B-1170 Brussels(BE)**
Inventor: **Callebaut, Jules**
**Vanderbruggenlaan 119**
**B-1070 Brussels(BE)**
Inventor: **Lepert, André**
**La Grange Route de Lillebonne**
**F-76190 Allouville Bellefosse(FR)**

(74) Representative: **Bawden, Peter Charles et al**
**EXXON CHEMICAL LIMITED EXXON CHEMI-CAL TECHNOLOGY CENTRE PO Box 1**
**Abingdon Oxfordshire OX13 6BB(GB)**

## Description

This invention relates to a process for the production of resin emulsions and the products thereof, in particular, emulsions having improved mechanical stability. This is particularly useful where emulsions which are mechanically stable are required as with those applied in coating lines, particularly adhesive coating lines where emulsion breakdown causes deposits on the apparatus, leading to lines in the coating requiring frequent shut down of the line for cleaning.

Polar modification of hydrocarbon tackifying resins can lead to modification of the resin properties such as improved compatibility with polar polymers, ease of emulsification, emulsion stability and adhesion on polar surfaces.

Grafting unsaturated anhydrides, acids on resins via a thermal condensation process is described in, for example, United States Patents 3379663 and 3953407. These processes necessitate long heating periods at elevated temperature prior to emulsification. Free radical grafting has also been suggested in United States Patents 3279925, 3005800 and 3161620, although these patents are not concerned with the production of emulsions.

We have now discovered a method of making modified resin emulsions which are stable and are compatible with polar polymers.

According to this invention there is provided a process for producing an emulsion of resin in water which comprises :

(1) forming an emulsion of aqueous solution of an unsaturated material reactive with the resin, which provides a polar function in the resin subsequent to reaction, in the resin which is liquid or rendered liquid by melting or dissolution ;
(2) causing the unsaturated material and the resin to react, and
(3) adding sufficient water to invert the emulsion to form an emulsion of the reacted resin in water.

Many different resins can be used in the process of the invention but hydrocarbon resins are preferred, the resins used preferably contain some unsaturation as is the case with the majority of commercially available resins. Examples of suitable resins are petroleum resins, (aliphatic, aromatic or aliphatic/aromatic), resins made by the copolymerization or pure aromatic monomers (e.g. styrene, methyl styrene or vinyl toluene) with olefins and/or diolefins and derivatives thereof, resin derivatives, polyterpenes or derivatives thereof or coumarone-indene resins.

Petroleum resins may be obtained by polymerising fractions having a boiling point from -15 °C to 410 °C at atmospheric pressure formed by the thermal cracking of petroleum feedstock. The fractions may be polymerised thermally or in the presence of a catalyst, for example, a Friedel-Crafts catalyst such as $AlCl_3$.

Usually the petroleum feedstock, e.g. light naphta, heavy naphta, kerosene, gas oil, vacuum gas oil and comprising $C_5$ olefins and diolefins, $C_6$ olefins and diolefins or a mixture of $C_5$ and $C_6$ olefins and diolefins is cracked in the presence of steam and the preferred temperature is between 600° and 900°C. The products from this cracking usually have a boiling point of -15°C to 280°C and may comprise about 30 to 60% olefins, 10 to 30% diolefins, 20 to 50% aromatics and 5 to 20% paraffins and naphthalenes.

Preferably the product is subjected to fractionation to remove $C_2$ to $C_4$ light ends, thermal soaking and distillation to remove hydrocarbons such as cyclic diolefins including cyclopentadiene and methyl cyclopentadiene as dimers.

After thermal soaking and distillation one obtains an overhead naphtha which usually boils at temperatures from 30 to 110°C, e.g. 30 to 80°C. This overhead naphtha comprises mainly $C_5$ diolefins such as isoprene and 1,3 cis- and transpentadienes, $C_5$ to $C_6$ monoolefins and aromatics, for example benzene. Generally the overhead naphthas have the following composition but the exact composition obviously depends on the nature of the petroleum feedstock which is subjected to steam-cracking.

|  | % by Weight |
| --- | --- |
| Total paraffins | 1.0 to 41.4 |
| Total diolefins | 35.5 to 14.5 |
| Total olefins | 33.5 to 13.0 |
| Total aromatics | 30.0 to 31.0 |
| Isoprene | 16.5 to 6.5 |
| Pentadiene 1,3 | 14.5 to 4.5 |
| Cyclopentadiene | 1.0 to 2.5 |

Alternatively, the feed may be a C9 feed which is a mixture of olefinic aromatics such as styrene, vinyl

2

toluene,$\alpha$- methyl styrene and indene or mixtures of C5 and C9 feeds may be polymerised. Alternatively, mixtures of C5 feeds and pure aromatic monomers mentioned above, and/or terpenes may be polymerised. A particularly suitable resin is an aliphatic-aromatic resin obtained by polymerising mixtures of olefins (essentially C5 and C6 olefins and diolefins) and aromatic monomers, for example, styrene,$\alpha$- methyl styrene and vinyl toluene.

If thermal polymerisation takes place, the fraction, i.e. overhead naphtha, is polymerised usually at a temperature of between 200°C and 280°C for 1 to 8 hours. If it is polymerised in the presence of Friedel-Crafts catalyst, the polymerisation temperature can vary, for example, between -80°C and 120°C, preferably between -10°C and 80°C, for 1/4 to 2 hours.

Friedel-Crafts catalysts such as aluminium trichloride, aluminium trichloride - aromatic hydrocarbon complexes, aluminium tribromide, boron trifluoride, boron trifluoride-phenol complex, titantium chloride, ethyl aluminium chloride, and ferric chloride for example may be used.

These catalysts may be used in the solid, liquid or gaseous state. Usually, the amount of catalyst which is used is between 0.05 and 3.0 wt.%, preferably 0.1 to 1.5 wt.%, based on the weight of the material to be polymerised.

After polymerisation the residual catalyst may be removed, for example, by washing with an aqueous solution of alkali, ammonia or sodium carbonate or by the addition of an alcohol such as methanol and subsequent filtration.

The final resin may then be stripped of unreacted hydrocarbons "raffinate" rich in benzene and/or paraffins (unreacted olefins) and low molecular weight oily oligomers by steam stripping or vacuum distillation. The finished product usually has a softening point of from 0° to 250°C, especially 30° to 140°C.

If desired, hydrogenated products of these resins can also be used. Hydrogenation can be performed at a reaction temperature of 150°C to 250°C, preferably 200° to 250°C, a hydrogen reaction pressure of 30 to 250 bar, preferably 50 to 100 bar, using a catalyst such as nickel or Raney nickel supported on a diatomaceous earth, alumina, silica gel or pumice carrier, in a solvent such as an aliphatic saturated hydrocarbon, for example hexane or heptane.

In general, the preferred resins are aliphatic petroleum resins obtained by polymerising a fraction having a boiling point of -15°C to 60°C at atmospheric pressure using a Friedel-Crafts catalyst.

The hydrocarbon resins are usually solid at ambient temperature and usually have an average molecular weight of 500 to 3000, preferably 700 to 2000. However, liquid or semi-liquid resins can be used.

In the process of the invention unless the resin is already liquid it has to be rendered liquid e.g. the resin is melted or dissolved in a solvent. If the resin is melted it may only be necessary to heat the resin to just above its melting point and it is not desirable to overheat the resin. For petroleum resins the melting point is usually between 0°C and 250°C. Alternatively, the resin may be dissolved in a suitable solvent, for example, a paraffin such as hexane, heptane, nonane, octane or mixtures thereof, an aromatic hydrocarbon such as benzene, toluene, xylene or an olefin such as heptene or nonene.

The unsaturated material reactive with the resin is one that provides a polar function in the resin subsequent to reaction which provides improved emulsion stability. Examples of suitable materials are unsaturated acids, anhydrides and amines and their salts.

The preferred materials are unsaturated organic carboxylates or organic sulphonates and suitable unsaturated organic carboxylates include the Group I or Group II metal or ammonium salts of unsaturated carboxylic or sulphonic acids, e.g. the sodium or potassium salts. Suitable unsaturated carboxylic acids are acrylic acid, methacrylic acid, acrylic or methacrylic acid dimer, oleic acid, cis- and trans-crotonic acids and the unsaturated dicarboxylic acids such as maleic, fumaric, itaconic and citraconic acids and their hemi esters. Suitable unsaturated sulphonic acids include vinyl sulphonic acid, allyl sulphonic acid and styrene sulphonic acid.

The unsaturated material is dissolved in water to form an aqueous solution which should be a sufficiently concentrated solution so that the amount of water present in the resin/salt mixture is such that a water-in-oil emulsion is formed. We prefer that no more than 20%, more preferably not more than 16 wt.% of water based on the weight of resin be present.

The aqueous solution is added to the liquid resin, preferably with stirring, more preferably with high shear agitation to ensure effective distribution of the aqueous solution throughout the liquid resin so that a water-in-resin emulsion is formed. The amount of unsaturated material added is preferably equivalent to 0.1 to 10, more preferably 0.5 to 3 wt.%, based on the weight of resin. Preferably an emulsifier is also added to the liquid resin, e.g. with the aqueous solution of carboxylate or sulphonate to facilitate the formation of the water-in-resin emulsion. The emulsifier should be an anionic or non-ionic surface-active agent or a mixture thereof.

Suitable anionic surface-active agents include alkaryl sulphonates, e.g. sodium or calcium alkyl benzene sulphonates; fatty alcohol sulphates, e.g. sodium lauryl sulphate; phosphate esters, e.g. the sodium salts of mono- and di-esters of orthophosphoric acid; esters of sulphosuccinic acid; the sodium salts of sulphated monoglycerides; and sulphonates or sulpho succinates of alkyl polyoxyalkylene oxide condensates or of alkyl phenon polyalkylene oxide condensates, e.g. the ammonium salt of nonylphenol polyethylene oxide sulphonic acid.

Suitable non-ionic surface-active agents include polyethylene oxides, e.g. fatty alcohols or alkyl phenols reacted with ethylene oxide, such as oleyl alcohol reacted with 15 moles of ethylene oxide; polyalkylene oxide block copolymers in which the alkylene oxide blocks are for example those of ethylene oxide and propylene oxide; carboxylic amides i.e. the condensation products of fatty acids and hydroxyalky amines, e.g. diethanolamine condensates and polyoxyethylene fatty acid amides, and carboxylic acid esters, e.g. glycerol esters, polyoxyethylene esters and ethoxylated and glycol esters of fatty acids.

If used, the amount of emulsifier which is added is preferably between 0.1 and 10 per cent by weight based on the weight of resin, for example, between 0.5 and 5 per cent by weight.

In one form of the invention once a water-in-resin emulsion is obtained, the unsaturated material is caused to react with the resin. We prefer the reaction be caused by the introduction of a free radical initiator into the emulsion. Suitable free radical initiators include organic peroxy compounds, for example, t-butyl peroxy-2-ethyl hexanoate, benzoyl peroxide, dicumyl peroxide and azo compounds, for example symmetric azonitriles such as 2,2'azobis (2-methylpropionitrile), 2,2'-azo-bis (2,4 dimethyl valero nitrile and unsymmetric azonitriles such as 2-(tertbutylazo)- 2-methylpropionitrile, water-soluble initiators, e.g. ammonium, sodium or potassium persulphates or redox systems, i.e. hydroperoxides or persulphates in conjunction with sodium bisulphite or sodium formaldehyde sulphoxylate.

The amount of free radical initator which is added is not critical but preferably 0.0001 to 0.05 per cent, for example, 0.001 to 0.01 per cent, by weight based on the weight of resin is sufficient.

Alternatively, the reaction can be initiated by radiation.

Whilst the nature of the reaction is uncertain, it is believed that with free radical initiation it may be grafting. We have, however, found that when the reaction is caused by radical initiation in order for the reaction to take place at a reasonable rate it is preferable for the reaction mixture to be heated, for example, to a temperature of about 70° to 100°C. However, the temperature is to some extent dependent on the resin softening point (if melted) and the half life time of any free radical initiator which is used. When using redox systems heating may not be required. The time for the reaction to be completed can vary, but usually it is complete after 2 hours and often after about 1 hour.

Before adding water or an aqueous solution, the reaction mixture can be cooled e.g. to a temperature of about 50°C to 95°C. Thereafter water or an aqueous solution is added until the emulsion inverts from a water-in-resin emulsion to an resin-in-water emulsion and one normally adds not more than 50 wt.%, preferably not more than 15 wt.% of water based on the weight of resin. Where the material reacted with the resin is an acid or an anhydride, an aqueous solution of a neutralising base may conveniently be used.

If the resin has been rendered liquid by the use of a solvent, it is at this stage after the inversion of the emulsion that the solvent may be removed. This can be achieved by distillation, but other methods which can be used include steam stripping.

In a preferred embodiment, the process comprises:

(i) adding to the liquid resin which is unsaturated the aqueous solution of the unsaturated organic carboxylate or an unsaturated organic sulphonate;

(ii) introducing to the emulsion of the aqueous solution in the resin which has thereby been formed a free radical initiator to effect grafting of the unsaturated carboxylate or sulphonate on the resin backbone and if necessary raising the temperature of the reaction mixture for grafting to occur, before adding water for inversion.

In an alternative embodiment, the resin emulsion is produced by:

(i) from 0.1 to 10 wt % based on the resin of the unsaturated material reactive with the resin is introduced into the liquid resin ;

(ii) the unsaturated material is reacted with the resin,

(iii) water is added to form the water in resin emulsion, before adding more water to form the resin in water emulsion

This embodiment of the process is primarily of value where the amount of reactive material is relatively low resulting in a modified resin which itself is difficult to emulsify. The materials useful in this embodiment are the same as those described previously for the invention and the resin is either liquid at ambient temperature or it has been rendered liquid e.g. by melting or dissolving in a solvent. Suitable unsaturated materials are the carboxylic acids and sulphonic acids and their salts mentioned previously and the preferred amount is 0.5 to 5 wt.% based on the weight of resin.

Thereafter radical initator is added to effect reaction of the unsaturated material and the unsaturated resin. In the next step water and optionally a neutralising agent are added preferably together with an emulsifier. The neutralising agent which is used when the reactive material is acidic is preferably added as an aqueous solution of the neutralising agent which can for example be an alkali metal hydroxide or alkaline earth metal oxide or hydroxide, for instance sodium hydroxide, potassium hydroxide, calcium oxide, calcium hydroxide or ammonium hydroxide. The amount of water added to the reaction mixture containing the grafted polymer is preferably not more than 20 wt.%, more preferably not more than 16 wt.% by weight based on the weight of resin.

At this stage a water-in-resin emulsion is formed. To obtain the desired product more water or an aqueous solution is added until the water-in-resin emulsion inverts to a stable resin-in-water emulsion. Thereafter any solvent which has been used to render the resin liquid is removed.

In both the principal process and alternative embodiment of the invention optionally an unsaturated monomer is also dispersed in the liquid resin. Examples of unsaturated monomers that may be used include unsaturated carboxylic acids, for example, acrylic acid, methacrylic acid, maleic acid, crotonic acid, fumaric acid, itaconic acid and citraconic acid. Other suitable monomers include unsaturated carboxylic esters, e.g. mono- and di-alkyl methacrylates, alkyl crotonates, hydroxy alkyl acrylates and methacrylates.

The amount of unsaturated monomer which is added will depend on how much grafting is required and the molecular weight of the monomer. These monomers are generally added to increase functionality of the hydrocarbon resin and eventually they modify the compatibility of the resin with the polymers.

The resin-in-water hydrocarbon resin emulsions produced by this invention usually have a small particle size, generally below 1 $\mu$m and preferably below 0.5 $\mu$m as measured using a Coulter N4 submicron particle size analyser, have high mechanical shear stability and compatibility with polar polymers. They are useful as tackifiers of adhesive polymer emulsions and are extremely useful in emulsion adhesive systems as coating compositions applied on high speed coating lines resulting in reduced emulsion breakdown, fewer deposits and longer coating runs. Such adhesive polymer emulsions include acrylic polymers, styrene-butadiene rubber (SBR) carboxylated SBR, polyvinyl acetate and vinyl acetate-ethylene copolymers. The resin emulsions can also be mixed with other polar emulsions such as acrylic resins to make pressure-sensitive adhesives.

The invention also applies to the production of pressure sensitive adhesive materials by an applying to a substrate the coating compositions discussed above and drying it to produce an adhesive layer.

Example 1

200 g of an unsaturated aliphatic/aromatic petroleum resin with a 30°C softening point and being a copolymer of a feed which is predominantly $C_5$ olefins and diolefins and 20 wt% of styrene were melted at 55°C and then mixed with 26.7 g of Fenopon EP-110 surfactant (30 wt% active ingredient in water), the surfactant being the ammonium salt of nonyl phenol-polyethylene oxide sulphonic acid (9 mole ethylene oxide).

After dispersion of the surfactant, water was slowly added at 55ºC with stirring until the emulsion inverted from a water-in-oil emulsion into an oil-in-water emulsion. Further water was added and the solids content was adjusted to 55 wt.%.

The resulting resin emulsion had a particle size greater than 1 $\mu$m and separated into two phases after two days storage at ambient temperature.

Example 2

Example 1 was repeated but using instead of 26.7 g of Fenopon EP-110 8 g of Atlas G3300 which is a calcium alkyl benzene sulphonate.

The resulting emulsion had a particle size of less than 1 $\mu$m and showed no phase separation after six months' storage at ambient temperature. However, when its mechanical stability was evaluated it was found that the emulsion broke down at a shear rate of 4000 $sec^{-1}$ as determined in a Haake Rotoviscometer.

Example 3

200 g of the resin used in Example 1 were melted at 55ºC and mixed with a solution of 5g of sodium crotonate in 26.7 g of Fenopon EP-110.

After the solution had emulsified into a water-in-oil emulsion, a solution of 0.01 g of tert-butylperoxy-2-ethylhexanoate in 2 g dioctyl phthalate (as dispersing agent for the free radical initiator) was added at 55ºC

with stirring and under a nitrogen blanket. After dispersion of the free radical initiator, the temperature was raised to 90°C and the mixture was allowed to react under stirring for one hour.

The mixture was then cooled to 55°C and warm water was added to the system until the emulsion inverted into an oil-in-water emulsion and further water was added to provide a 55 wt.% solids emulsion.

The resulting emulsion had a particle size of 0.3 $\mu$m and showed no phase separation after six months' storage at ambient temperature. Its mechanical stability was evaluated and this showed that the emulsion was stable within the shear rates limits of the Haake Rotoviscometer (10,000 sec$^{-1}$).

Example 4

200 g of the resin used in Example 1 were melted at 70°C and mixed with 4g of methacrylic acid and 0.01 g of t-butylphenoxy-2-ethyl hexanoate in 2g dioctyl phthalate under a nitrogen blanket.

The mixture was heated at 90°C for 1 hour and at 120°C for 30 minutes. It was then cooled down to 55°C. The acid was then neutralised by adding to the molten resin a concentrated solution of KOH.

The resin was then mixed with 26.7 g of Fenopon EP-115 (ammonium salt of nonyl phenol polyethylene oxide sulphonic acid, 15 moles ethylene oxide, 30% active ingredient in water). After dispersion of the surfactant, water was slowly added at 55°C with stirring until the emulsion inverted into an oil-in-water emulsion and further water was added to provide a 55 wt.% soldis emulsion.

The resulting emulsion had a similar particle size and stability to the emulsion of Example 3.

The modified resin emulsion of Examples 3 and 4 were evaluated in two commercial acrylic pressure-sensitive adhesive (PSA) polymer latices and showed an improvement in the loop tack on polyethylene and ball tack when used with Acronal V205 and an overall improvement when used with Acronal 85D.

## TABLE

### Evaluation of Resin Emulsions of Examples 3 and 4 as Acrylic PSA Latex Tackifier (100 phr acrylic; 50 phr resin)

| | Acronal V 205 | | | Acronal 85 D | | |
|---|---|---|---|---|---|---|
| | As Such | Tackified Ex.3 | Tackified Ex.4 | As Such | Tackified Ex.3 | Tackified Ex.4 |
| Peel strength (g.cm$^{-1}$) (PSTC-1)* | 700 | 660 | 300 | 330 | 460 | 390 |
| Loop tack (N/inch) on metal (steel) (FTM-9)* | 12.8 | 10.5 | 8.5 | 9.3 | 8.6 | 9.0 |
| On polyethylene (FTM-9)* | 5.0 | 7.0 | 7.5 | 3.0 | 6.0 | 7.5 |
| Ball tack (cm) (PSTC-7)* | 3.5 | 2.5 | 2.0 | 7.0 | 5.0 | 4.0 |
| Shear (hrs) (PSTC-7)* | 2.0 | 0.4 | 0.1 | >100.0 | 2.5 | 6.1 |

* Test methods used

**Claims**

1. A process for producing an emulsion of resin in water which comprises :
   (1) forming an emulsion of aqueous solution of an unsaturated material reactive with the resin, which provides a polar function in the resin subsequent to reaction, in the resin which is liquid or rendered liquid by melting or dissolution ;
   (2) causing the unsaturated material and the resin to react, and
   (3) adding sufficient water to invert the emulsion to form an emulsion of the reacted resin in water.

**2.** A process according to claim 1 wherein the unsaturated material reactive with the resin is an organic carboxylate or sulphonate.

**3.** A process according to claim 2 in which the organic carboxylate or sulphonate is a Group I or Group II metal salt or an ammonium salt.

**4.** A process according to claim 2 or claim 3 wherein the carboxylic acid is acrylic acid, methacrylic acid or cis-or trans- crotonic acid.

**5.** A process according to claim 2 or claim 3 wherein the sulphonic acid is vinyl sulphonic acid, allyl sulphonic acid or styrene sulphonic acid.

**6.** A process according to any one of the preceding claims wherein the amount of water provided by the aqueous solution is not more than 20 wt% based on the weight of resin.

**7.** A process according to claim 6 wherein the amount of water is no more than 16 wt % based on the weight of resin.

**8.** A process according to any of claims 2 to 7 wherein the amount of aqueous solution of unsaturated material reactive with the resin is sufficient to provide from 0.1 to 10 wt % of the carboxylate or sulphonate based on the weight of resin.

**9.** A process according to any of claims 2 to 8 which comprises :
(i) adding to the liquid resin which is unsaturated the aqueous solution of the unsaturated organic carboxylate or an unsaturated organic sulphonate;
(ii) introducing to the emulsion of the aqueous solution in the resin which has thereby been formed a free radical initiator to effect grafting of the unsaturated carboxylate or sulphonate on the resin backbone and if necessary raising the temperature of the reaction mixture for grafting to occur, before adding water for inversion.

**10.** A process according to any of claims 1 to 8 in which :
(i) from 0.1 to 10 wt % based on the resin of the unsaturated material reactive with the resin is introduced into the liquid resin ;
(ii) the unsaturated material is reacted with the resin,
(iii) water is added to form the water in resin emulsion, before adding more water to form the resin in water emulsion

**11.** A process according to any one of the preceding claims 1 to 10 wherein the resin is a petroleum resin.

**12.** A process according to any of claims 1 to 10 wherein the resin is a rosin derivative.

**13.** A process according to any one of the preceding claims wherein an emulsifier is also added to the liquid resin.

**14.** A process according to claim 13 wherein the emulsifier is an alkaryl sulphonate or a sulphonate of an alkyl phenol polyalkylene oxide condensate.

**15.** A process according to any one of the preceding claims wherein an unsaturated monomer is also dispersed in the resin after it has been rendered liquid.

**16.** A process according to claim 15 wherein the unsaturated monomer is an ester of an unsaturated carboxylic acid.

**17.** The use of the resin emulsion produced by a process according to any of claims 1 to 16 as a tackifier of adhesive polymer emulsions.

**18.** The use according to claim 17 whenever the adhesive polymer emulsion is an acrylic polymer, a styrene-butadiene rubber, a carboxylated styrene-butadiene rubber, a polyvinyl acetate or a vinyl acetate-ethylene copolymer.

19. Coating composition for the provision of a pressure sensitive adhesive comprising a mixture of a polymer emulsion and a resin emulsion produced by a process according to any of claims 1 to 16.

20. A pressure sensitive adhesive coating composition according to claim 19 in which the polymer emulsion is an emulsion of an acrylic polymer, a styrene-butadiene rubber, a carboxylated styrene-butadiene rubber, a polyvinyl acetate or a vinyl acetate-ethylene copolymer.

21. The production of pressure-sensitive adhesive materials comprising applying to a substrate a coating composition according to claim 19 or claim 20 and drying to produce an adhesive layer.

**Patentansprüche**

1. Verfahren zur Herstellung einer Harz-Emulsion in Wasser, bei dem man
(1) eine Emulsion einer wäßrigen Lösung eines ungesättigten, mit dem Harz reaktionsfähigen Materials, das im Harz nach erfolgter Umsetzung eine polare Funktion liefert, in dem Harz, das flüssig oder durch Schmelzen oder Auflösung flüssig gemacht ist, bildet,
(2) das ungesättigte Material und das Harz zur Reaktion bringt, und
(3) ausreichend Wasser zugibt, um die Emulsion unter Bildung einer Emulsion des umgesetzten Harzes in Wasser umzukehren.

2. Verfahren nach Anspruch 1, bei dem das ungesättigte, mit dem Harz reaktionsfähige Material ein organisches Carboxylat oder Sulfonat ist.

3. Verfahren nach Anspruch 2, bei dem das organische Carboxylat oder Sulfonat ein Gruppe I oder Gruppe II Metall- oder ein Ammoniumsalz ist.

4. Verfahren nach Anspruch 2 oder Anspruch 3, bei dem die Carbonsäure Acrylsäure, Methacrylsäure oder cis- oder trans-Crotonsäure ist.

5. Verfahren nach Anspruch 2 oder Anspruch 3, bei dem die Sulfonsäure Vinylsulfonsäure, Allylsulfonsäure oder Styrolsulfonsäure ist.

6. Verfahren nach einem der vorhergehenden Ansprüche, bei dem die durch die wäßrige Lösung gelieferte Wasssermenge, bezogen auf das Gewicht des Harzes, nicht größer als 20 Gew.-% ist.

7. Verfahren nach Anspruch 6, bei dem die Wassermenge, bezogen auf das Gewicht des Harzes, nicht größer als 16 Gew.-% ist.

8. Verfahren nach den Ansprüchen 2 bis 7, bei dem die Menge der wäßrigen Lösung des ungesättigten, mit dem Harz reaktionsfähigen Materials ausreichend ist, um 0,1 bis 10 Gew.-% des Carboxylats oder Sulfonats, bezogen auf das Gewicht des Harzes, zu liefern.

9. Verfahren gemäß einem der Ansprüche 2 bis 8, bei dem man
(i) die wäßrige Lösung des ungesättigten Carboxylats oder eines ungesättigten, organischen Sulfonats zu dem flüssigen Harz, das ungesättigt ist, gibt;
(ii) in die Emulsion der wäßrigen Lösung in dem Harz, die dadurch gebildet worden ist, einen freien Radikalstarter einträgt, um die Pfropfung des ungesättigten Carboxylats oder Sulfonats auf das Harzgerüst zu bewirken, und, falls notwendig, die Temperatur der Reaktionsmischung erhöht, damit die Pfropfung erfolgt, bevor Wasser zur Umkehrung zugefügt wird.

10. Verfahren nach einem der Ansprüche 1 bis 8, bei dem
(i) bezogen auf das Harz 0,1 bis 10 Gew.-% des ungesättigten, mit dem Harz reaktionsfähigen Materials in das flüssige Harz eingetragen werden,
(ii) das ungesättigte Material mit dem Harz umgesetzt wird,
(iii) Wasser zugefügt wird, um die Wasser-in-Harz-Emulsion zu bilden, bevor mehr Wasser zugegeben wird, um die Harz-in-Wasser-Emulsion zu bilden.

**11.** Verfahren nach einem der vorhergehenden Ansprüche 1 bis 10, bei dem das Harz ein Erdölharz ist.

**12.** Verfahren nach einem der vorhergehenden Ansprüche 1 bis 10, bei dem das Harz ein Terpentinharz ist.

**13.** Verfahren nach einem der vorhergehenden Ansprüche, bei dem dem flüssigen Harz außerdem ein Emulgator zugesetzt wird.

**14.** Verfahren nach Anspruch 13, bei dem der Emulgator ein Alkarylsulfonat oder ein Sulfonat eines Alkylphenol-Polyalkenoxid-Kondensats ist.

**15.** Verfahren nach einem der vorhergehenden Ansprüche, bei dem in dem Harz, nachdem es flüssig gemacht worden ist, außerdem ein ungesättigtes Monomer dispergiert wird.

**16.** Verfahren nach Anspruch 15, bei dem das ungesättigte Monomer ein Ester einer ungesättigten Carbonsäure ist.

**17.** Verwendung der Harzemulsion, hergestellt nach einem Verfahren gemäß einem der Ansprüche 1 bis 16, als Klebrigmacher von Klebstoff-Polymeremulsionen.

**18.** Verwendung nach Anspruch 17, bei dem die Klebstoff-Polymeremulsion ein Acrylpolymer, ein Styrol-Butadien-Kautschuk, ein carboxylierter Styrol-Butadien-Kautschuk, ein Polyvinylacetat oder ein Vinylacetat-Ethylen-Copolymer ist.

**19.** Beschichtungszusammensetzung zur Herstellung eines Haftklebers, die eine Mischung einer Polymeremulsion und einer nach einem Verfahren gemäß einem der Ansprüche 1 bis 16 hergestellten Harzemulsion umfaßt.

**20.** Haftkleber-Beschichtungszusammensetzung nach Anspruch 19, bei der die Polymeremulsion eine Emulsion eines Acrylpolymers, eines Styrol-Butadien-Kautschuks, eines carboxylierten Styrol-Butadien-Kautschuks, eines Polyvinylacetats oder eines Vinylacetat-Ethylen-Copolymers ist.

**21.** Herstellung von Haftklebermaterialien, bei der eine Beschichtungszusammensetzung gemäß Anspruch 19 oder Anspruch 20 auf ein Substrat aufgebracht und getrocknet wird, um eine Klebstoffschicht herzustellen.

**Revendications**

**1.** Procédé de production d'une émulsion de résine dans de l'eau, qui consiste :
(1) à former une émulsion d'une solution aqueuse d'une matière insaturée réactive avec la résine, qui introduit une fonction polaire dans la résine après réaction, dans la résine qui est liquide ou rendue liquide par fusion ou dissolution ;
(2) à provoquer la réaction de la matière insaturée et de la résine, et
(3) à ajouter une quantité d'eau suffisante pour l'inversion de l'émulsion, pour former une émulsion dans l'eau de la résine ayant réagi.

**2.** Procédé suivant la revendication 1, dans lequel la matière insaturée réactive avec la résine est un carboxylate ou sulfonate organique.

**3.** Procédé suivant la revendication 2, dans lequel le carboxylate ou sulfonate organique est un sel d'un métal du Groupe I ou du Groupe II ou un sel d'ammonium.

**4.** Procédé suivant la revendication 2 ou la revendication 3, dans lequel l'acide carboxylique est l'acide acrylique, l'acide méthacrylique ou l'acide cis- ou transcrotonique.

**5.** Procédé suivant la revendication 2 ou la revendication 3, dans lequel l'acide sulfonique est l'acide vinylsulfonique, l'acide allylsulfonique ou l'acide styrène-sulfonique.

**6.** Procédé suivant l'une quelconque des revendications précédentes, dans lequel la quantité d'eau fournie par la solution aqueuse est non supérieure à 20 % en poids, sur la base du poids de la résine.

**7.** Procédé suivant la revendication 6, dans lequel la quantité d'eau est non supérieure à 16 % en poids, sur la base du poids de la résine.

**8.** Procédé suivant l'une quelconque des revendications 2 à 7, dans lequel la quantité de solution aqueuse de matière insaturée réactive avec la résine est suffisante pour fournir 0,1 à 10 % en poids du carboxylate ou sulfonate, sur la base du poids de la résine.

**9.** Procédé suivant l'une quelconque des revendications 2 à 8, qui consiste :
(i) à ajouter à la résine liquide qui est insaturée la solution aqueuse du carboxylate organique insaturé ou d'un sulfonate organique insaturé ;
(ii) à introduire dans l'émulsion de la solution aqueuse dans la résine qui a été ainsi formée un initiateur radicalaire pour provoquer le greffage du carboxylate ou sulfonate insaturé sur le squelette de la résine et, si nécessaire, à élever la température du mélange réactionnel pour provoquer le greffage, avant l'addition d'eau pour provoquer l'inversion.

**10.** Procédé suivant l'une quelconque des revendications 1 à 8, dans lequel :
(i) une quantité de 0,1 à 10 % en poids, sur la base de la résine, de la matière insaturée réactive avec la résine est introduite dans la résine liquide ;
(ii) la matière insaturée est amenée à réagir avec la résine,
(iii) de l'eau est ajoutée pour former l'émulsion eau-dans-résine, avant addition d'une quantité supplémentaire d'eau pour former l'émulsion résine-dans-eau.

**11.** Procédé suivant l'une quelconque des revendications 1 à 10 précédentes, dans lequel la résine est une résine dérivée du pétrole.

**12.** Procédé suivant l'une quelconque des revendications 1 à 10, dans lequel la résine est un dérivé de colophane.

**13.** Procédé suivant l'une quelconque des revendications précédentes, dans lequel un émulsionnant est également ajouté à la résine liquide.

**14.** Procédé suivant la revendication 13, dans lequel l'émulsion est un alkaryl-sulfonate ou un sulfonate d'un produit de condensation alkylphénol-polymère d'oxyde d'alkylène.

**15.** Procédé suivant l'une quelconque des revendications précédentes, dans lequel un monomère insaturé est également dispersé dans la résine après que cette résine a été rendue liquide.

**16.** Procédé suivant la revendication 15, dans lequel le monomère insaturé est un ester d'un acide carboxylique insaturé.

**17.** Utilisation de l'émulsion de résine produite par un procédé suivant l'une quelconque des revendications 1 à 16 comme agent d'adhésivité d'émulsions de polymères adhésifs.

**18.** Utilisation suivant la revendication 17, dans laquelle l'émulsion de polymère adhésif est une émulsion d'un polymère acrylique, d'un caoutchouc styrène-butadiène, d'un caoutchouc styrène-butadiène carboxylé, d'un polymère d'acétate de vinyle ou d'un copolymère acétate de vinyléthylène.

**19.** Composition de revêtement pour la production d'un adhésif sensible à la pression, consistant en un mélange d'une émulsion de polymère et d'une émulsion de résine produite par un procédé suivant l'une quelconque des revendications 1 à 16.

**20.** Composition de revêtement adhésif sensible à la pression suivant la revendication 19, dans laquelle l'émulsion de polymère est une émulsion d'un polymère acrylique, d'un caoutchouc styrène-butadiène, d'un caoutchouc styrène-butadiène carboxylé, d'un polymère d'acétate de vinyle ou d'un copolymère acétate de vinyl-éthylène.

**21.** Production de matières adhésives sensibles à la pression, consistant à appliquer à un substrat une composition de revêtement suivant la revendication 19 ou la revendication 20 et à effectuer un séchage pour produire une couche adhésive.